# EUROPEAN PATENT APPLICATION

(11) **EP 1 162 806 A2**
(43) Date of publication of application: **12.12.2001**
(21) Application number: 01000146.9
(22) Date of filing: 16.05.2001
(51) Int. Cl.: H04L 29/06

(54) **Simultaneous viewing and/or listening to a plurality of transmitted multimedia streams through a centralized processing space**

(30) Priority: 08.06.2000 US 589194
(71) Applicant: International Business Machines Corporation, Armonk, NY 10504 (US)
(72) Inventor: Gonzalez, Karl, IBM United Kingdom Limited, Hursley, Winchester, Hampshire SO21 2JN (GB)
(74) Representative: Burt, Roger James, Dr.

(57) **Abstract**

A method, system, and computer program establish communication with at least two clients to a server in a network. After establishing communication, a template is activated in the server, which also has a plurality of decoders embedded into the template. When the video sources transmit their video data streams to the server, each of the embedded decoders on the browser of the destination computer responds to a respective video data stream by opening and playing the streaming video independently of the other decoder(s). By using the data log splitter, the video streams can be viewed as multiple screens within a central IP network accessible window. Since the decoders are embedded separately in the IP network accessible space, each decoder works to process incoming data without interfering with the hardware resources of the other decoders on the system. Furthermore, since the encoded data is sent directly to the centralized decoders, the decoding process does not burden the web servers either. The inherent flexibility of the system allows for a mix of video encoding servers, hardware and video encoding software. Through one HTML page, numerous users can have access to video services without having to download additional software, or deal with proprietary systems.

## Description

### Field of the Invention

This invention relates generally to networks and methods of operation. More specifically, the invention relates to a system and method for enabling clients on a multimedia network to view and/or listen to multiple simultaneous independent multimedia streams through decoders embedded into an IP network accessible template.

### Background of the Invention

The proliferation and expansion of computer systems, networks, databases, the Internet, and particularly the World Wide Web (WWW), has resulted in a vast and diverse collection of information and means of communication. One means of communication that has gained increased usage on the WWW is video multimedia communication. Currently there are two ways in which a user may view video on the WWW. The first is to simply download the video from a web site, or some other server. The entire video file is downloaded by the user to a local storage medium. Only after the file has been stored may the user then access the video and open the file through a video player application.

The advantage of such a system is that the quality of the picture that the user sees is predetermined. In other words, once the user opens the video file from the local storage medium, the quality of the picture is not subject to any interference outside the realm of the user's computer. Changes in line speed may delay the download, but they won't cause fluctuations in frame rate, audio drop-out, etc., since the file is not being played, but is only being downloaded However, the disadvantage is that the downloaded video file can contain enormous amounts of data; this data would inevitably take up a large amount of storage space on the local storage medium. Furthermore, if the user is relying on a modem to download the file, it may take hours to download the file.

The second way in which users can access video through "streaming." The technique of video streaming involves transferring data such that it can be processed as a steady and continuous stream. Streaming technologies are becoming increasingly important with the growth of the internet because most users do not have fast enough access to download large multimedia files quickly. With streaming, the client browser or plug-in can start displaying the data before the entire file has been transmitted. Thus, the user does not have to wait for the whole video to download before the user can start viewing.

To view a streaming video asset, the user must also use a video/audio player application, which may be configured to automatically launch within the user's browser. Once launched, the video player loads in the streaming asset. However, a disadvantage of streaming video is that its quality is dependent on the data transmission channel. A streaming software decoder adjusts itself to the data rate as it plays. So if the data transmission rate begins to fall, the software drops the frame rate accordingly in the player in order to keep the video playing.

The problems of streaming video become compounded when streaming multimedia (video/audio) is used in a multi-user environment, such as video conferencing. In such applications, users are limited in their viewing capabilities, since the capability to concurrently view multi-party windows requires the addition of additional hardware (such as Multiple Control Units or reflectors) and/or software (on the client and/or server). Furthermore, current video conferencing products do not produce good quality video and/or audio in an Internet low-bandwidth environment due to the inability to reconfigure the encoding/decoding network video and/or audio streams at the encoding workstation or server.

Furthermore, current video conferencing systems cannot be accessed through a standard web page, but must be run as a standalone application. In other words, an additional application must be downloaded and installed on the user's system. Typically, these systems and software are proprietary in nature. This can create problems for multiple users, since only licensed users would be able to view and interact with one another. Additionally, current products only support a limited amount of concurrently open windows for video viewing. While these systems provide adequate capabilities for point-to-point conferencing, using these systems for multiparty / multipoint applications become less reliable and also impose additional expenses on the users.

The use of the existing consumer software and systems do not address the needs of multiparty users in other aspects as well. Because of the memory requirements of some current commercial video players, multiple windows cannot be opened automatically through conventional means because each window effectively terminates or seriously impedes the viewing of other windows upon opening. Because there is a lack of a central processing space, the efficient use of automatically viewable multi-party windows is not possible. Accordingly, a need exists to provide systems and methods which overcome the limitations of the prior art for simultaneous viewing and/or listening by clients to a plurality of transmitted media streams in a multimedia network.

It would be desirable to provide a central processing space through which multiple users may engage in videoconferencing using their TCP/IP browsers; no special hardware or proprietary software need be installed.

It would also be desirable to provide a central processing space through which one or more users may simultaneously view multiple streaming video/audio multimedia streams through the use of their TCP/IP browsers.

It would further be desirable to allow the users to view and/or hear multiple streams without installing special hardware or proprietary software.

### Disclosure of the Invention

The present invention involves the use of a technique called "log splitting" in a network. The technique involves a method, system, computer program and computer program article of manufacture that establishes communication with at least two video sources to a client. After establishing communication, a template is activated, which also has a plurality of embedded decoders. When the video sources transmit their video data streams, each of the embedded decoders on the browser of the destination computer responds to a respective video data stream by opening and playing the streaming video independently of the other decoder(s). By using the data log splitter, the video streams can be viewed as multiple screens within a central IP network accessible window. Since the decoders are embedded separately in the IP network accessible space, each decoder works to process incoming data without interfering with the hardware resources of the other decoders on the system. Furthermore, since the encoded data is sent directly to the centralized decoders, the decoding process does not burden the web servers either. The inherent flexibility of the system allows for a mix of video encoding servers, hardware and video encoding software. Through one HTML page, numerous users can have access to video services without having to download additional software, or deal with proprietary systems.

### Brief Description of the Drawings

The present invention will now be described, by way of example only, with reference to the accompanying drawings, in which:
**FIG. 1** shows an illustration of a multimedia system in a video conferencing environment and incorporating the principles of the present invention;
**FIG. 2** shows a representation of an apparatus and a process through which a client transmits data in a videoconference to the system of Figure 1;
**FIG. 3** illustrates multiple windows in a screen viewed by a client and provided by browser incorporated in the system of Figure 1;
**FIG. 4** illustrates an alternate embodiment of Figure 1 in which a client is connected to a video wall; and
**FIG. 5** shows a flow diagram implementing the process involved in the system of Figure 1.

### Detailed Description of the Invention

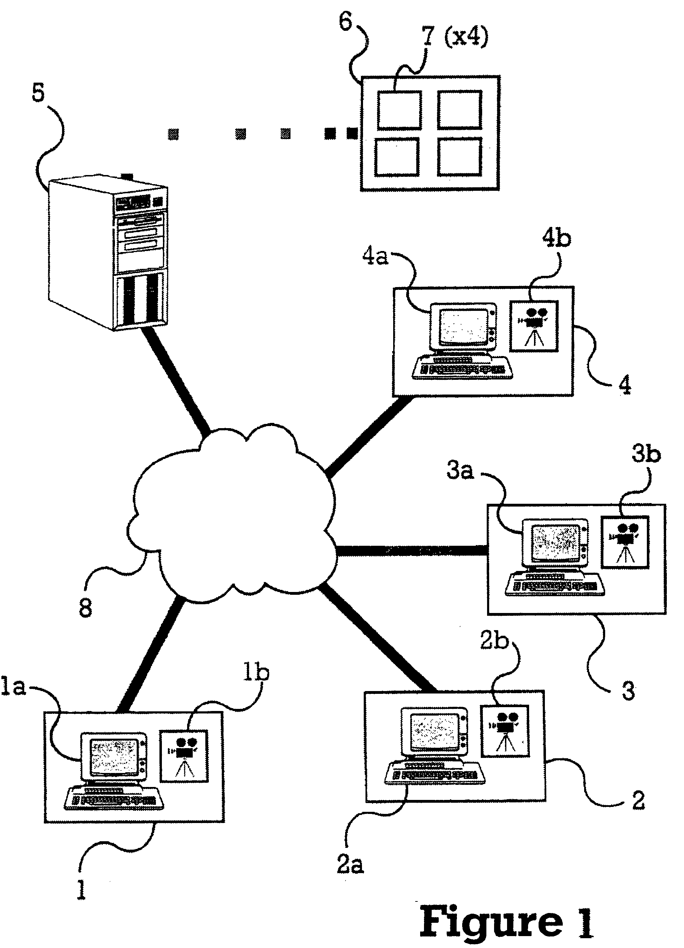

**FIG. 1** illustrates an embodiment of the system architecture containing four clients **1**, **2**, **3** and **4**. Each of the clients serve as transmitters and/or receivers of data through a network **8**. The client may come in the form of a user interacting with an appropriately configured computer system, or may be an application computer system, such as a video server or transmitter. In the preferred embodiment, the system is set up for a multiparty video conferencing session, conducted over a computer network (i.e., the Internet).

In the preferred embodiment, a web server **5** is configured to be connected to a network **8**, such as the Internet or WWW. The web server **5** is set in the disclosed embodiment to run an operating system that supports Transmission Control Protocol/Internet Protocol (TCP/IP). The web server **5** is configured to distribute and transmit video and audio streams, along with any other pertinent data, over the IP network. Typically the transmissions will occur through Hypertext Transfer Protocol (HTTP), which take place through TCP/IP sockets. The web server **5** is configured to contain V/A capture capabilities, as well as provide other V/A processing capabilities. In one embodiment, an HTML template **6** is housed in the web server **5**. The HTML template **6** is embedded with a predetermined number of decoders **7**.

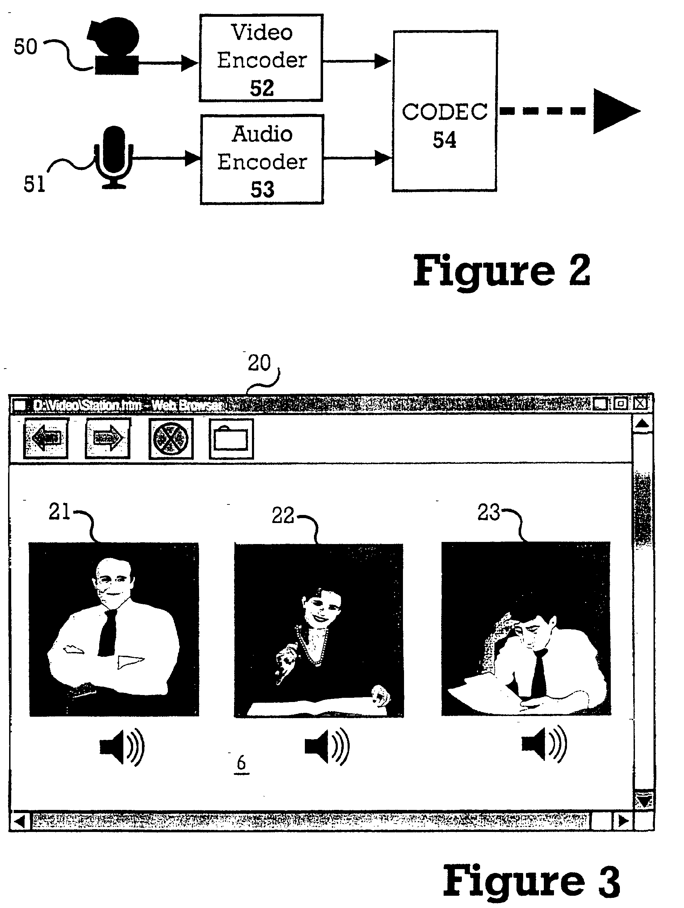

Each of the clients **1**, **2**, **3**, and **4** are connected through a TCP/IP connection, and all have connections to an encoder. One illustration of such a connection is shown in **FIG. 2**. The encoder may reside in each of the clients own processor space (**1a-4a**), or may alternately be accessible through an external connection. Each of the clients is also equipped with a multimedia transmitting device (**1b-4b**) which can include hardware such as a video camera or computer "web-cam," as well as other devices, including a unidirectional, echo cancellation microphone and a set of shielded computer speakers.

**FIG. 2** further illustrates a connection that can be made on a client's system for transmitting V/A data. **FIG. 2** shows, as an example, a web-cam **50** and a microphone **51** set up on a client's computer. Both the web-cam **50** and the microphone **51** are connected to a video encoder and an audio encoder, respectively. Both encoders may exist as separate encoders, or may come bundled together in one package. When the web-cam and microphone capture the V/A data, the encoders subsequently encode the data into a proper format, and send the encoded data to be compressed for transmission in the codec **54**. Any of the standard formats (e.g., MPEG, AVI, etc.) may be used. After processing in the codec, the data is then transferred out to the network.

In order for each client to participate in a videoconference, the multimedia device transmits images to a video encoder. The audio transmitted during the session is transmitted to an audio encoder, which may reside in the processor space, the video encoder, or any other suitable space that is appropriate. Each of the V/A encoders should also be configured within the software to allow the use of different video and audio compressors/decompressors ("codec"). Uncompressed video takes up large amounts of space (approximately 27 MB per second), which is more data than most systems can handle. In order to make desktop video more feasible, codec algorithms are incorporated to handle the compression and decompression of the video and/or audio. Essentially, the videos are compressed by the removal of redundant audio and video data.

As each of the multimedia devices transmit to the encoder, the encoder processes and compresses the video, so that it may be distributed over the IP network **8**. The encoder card should have capabilities to encode both low and high bit rate video at 15 FPS or more. The video encoder should also support PCP/IP, HTTP or UDP distribution as well as having "proxy" or "socks" support. Furthermore, the encoder software should have a very low buffer setting (e.g., 1 second).

Returning to **FIG. 1**, four decoders 7 are disclosed, although it is understood that any number of decoders can be embedded into the template 6, depending on the needs of the videoconference. Each decoder will correspond to a window that will open in the template; the size of the window can be modified depending on the resolution of the computer display. The decoders may be embedded as JAVA applets, or any other suitable computer program means. The decoders allow for multiple V/A streams to be decoded in one HTML or XML central processing space concurrently and independently from each other. In order to maintain the best video transmission, the decoder software should be set to buffer at a very low rate (as close to zero seconds as possible).

The HTML template **6** serves as a facilitator for the client session. As each of the client's web browsers load the template into each computer **1-4,** the template **6** serves as a base within each client's system. The template **6** serves to process client and access data, while the decoders process incoming video data. Thus each encoded stream transmitted from each client directly to the respective decoder on the other client's systems.

An example of the display each client will see is displayed in **FIG. 3**. The windows **21**, **22** and **23** are opened within the HTML template 6, and displayed through the browser **20**. For example, if client **1** were engaged in a videoconference with clients **2**, **3** and **4**, the result would be very similar to what is shown in **FIG. 3**. Clients **2**, **3** and **4** would be viewable to client **1** through windows **21-23**. The browser **20** display may contain additional graphical user interfaces (GUI) to help clients navigate and control the images and sound displayed on their respective screens.

When clients participate in the videoconference, each client would type in the URL or IP address of the web server hosting the conference. Once the network connection is made, the web server **5** can challenge the client with a password, user identification, or otherwise restrict access to the server. Additionally (or alternately), the HTML template can be hard-coded with the IP addresses of the source V/A of each client. Once the IP addresses are matched for that client, the decoders are automatically activated, thus displaying the multiple streams available to the particular client's browser **20**. This way, only the users with an authorized IP address may view the videoconference. Furthermore, the HTML page can automatically determine which port will be used to stream the data to.

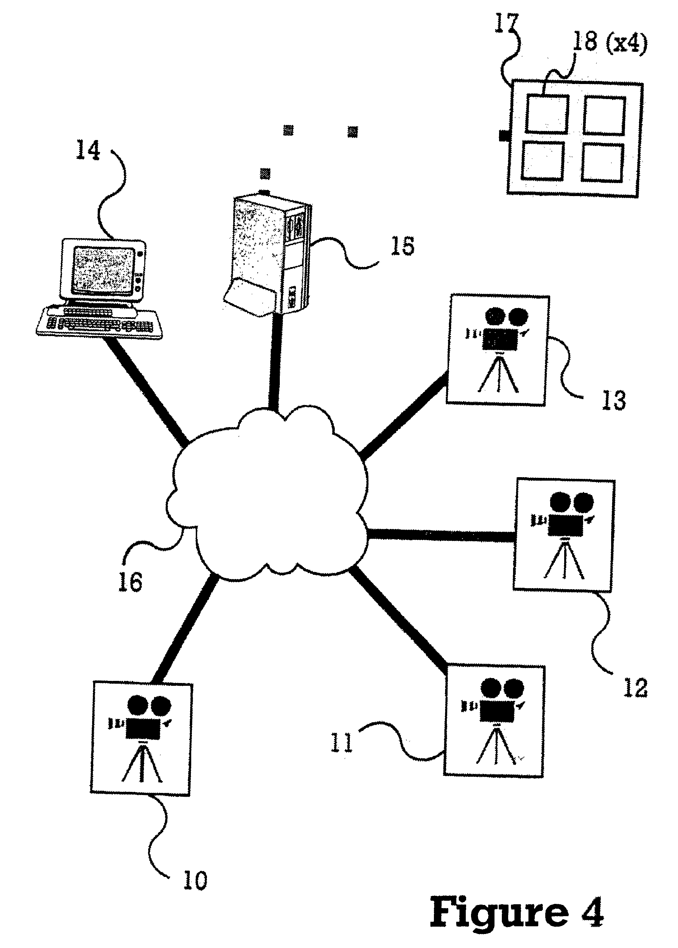

An alternate embodiment of the present invention is shown in **FIG. 4**. While the same principles contained in **FIG. 1** are contained here, the configuration of the system is altered to perform as a video wall. In the alternate embodiment, numerous video sources **10-13** are connected to a network **16**. The video sources can be from a video server, TV, TCP/IP, UDP, HTTP, or any other source that allows for transmission across a network. The video transmitted from sources **10-13** will typically be encoded and compressed when transmitted through the network **16**.

A video server **15** is configured to be a central transmitting point for each of the video streams. An HTML template **17** is housed within the video server, and is embedded with multiple V/A decoders **18**. Like in the previous embodiment, the actual number of decoders embedded into the template can vary, depending on the needs of the video wall administrator.

When a client **14** logs into the video server **15**, the server automatically launches the decoder software, and the client will immediately have multiple viewable screens available through the browser. The client's access to the server may be restricted through a password, client identification, or other types of security measures.

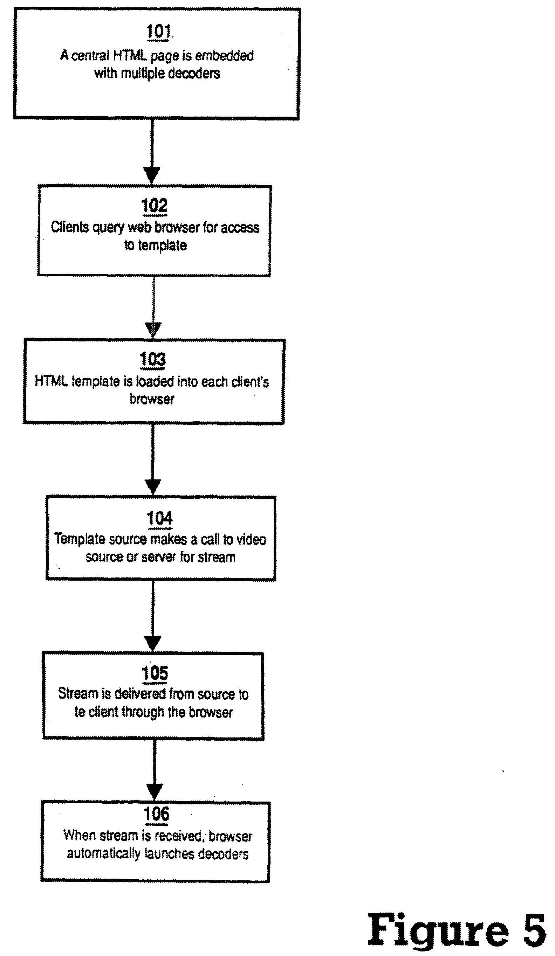

The flowchart in **FIG. 5** further clarifies the process through which the data log splitter operates. In step **101**, a central HTML template is embedded with multiple decoders. The HTML template is "central" in the sense that the page is utilized as a destination for multiple clients on a network. When the central HTML space is established, the clients request access through their web browsers **102**. After gaining access, the HTML template is downloaded into the client's browser **103**, so that the client is ready for the session. In **104**, the template makes a call to a video source or server for the video and/or audio stream. Once the stream is transmitted from the source, it is delivered to the client through the browser **105** and bypassing the web server. Once the stream reaches the destination browser **106**, the browser automatically launches the decoder associated with a particular stream. At this point, multiple windows will open on each client's browser window, where V/A data can be exchanged among each of the clients.

It is understood that the nature of the invention provides for numerous variations that could be implemented without deviating from the spirit and scope of this invention. For example, the bit rate of streaming video can occur in a low bit rate (28.8 KB, 56 KB, etc.), a high bit rate (1.5 MB or higher), or a mix of various rates, both low and high. Furthermore, the location and placement of the encoders and decoders can vary, depending on the capabilities of the system. The encoders and decoders can be located on a single server, or even on a client's computer, provided that there is enough memory and processing speed to encode one stream, while decoding multiple V/A streams at the same time. Also, scratchpad buffers may be incorporated into the system to provide additional protection to the integrity of the V/A streams.

## Claims

1. A method comprising:
(a) establishing an IP network accessible template;
(b) embedding a plurality of decoders into the template;
(c) receiving a plurality of independent data streams simultaneously transmitted to the template; and
(d) processing each of the plurality of independent data streams through a respective decoder, wherein each data stream is simultaneously accessible to at least one client.

2. A method as claimed in claim 1, wherein the template is an HTML template of predetermined size, housed inside of a processing machine and wherein the transmission of data streams occurs over the Internet.

3. A method according to claim 1, wherein the template and the server support TCP/IP.

4. A method as claimed in claim 1, wherein each of the plurality of decoders contains a video and/or audio decoder and wherein the data stream contains a multimedia message.

5. A method as claimed in claim 1, wherein each of the decoders are contained in a JAVA applet.

6. A method as claimed in claim 1, wherein the template further comprises a security challenge for the client.

7. A method as claimed in any one of claims 1 to 5, for enabling a stand-alone multi-screen window wherein the IP network accessible template is an HTML template;
the plurality of decoders are multiple video decoders;
the data streams are video streams;
the step of processing the data streams includes the steps of associating a decoder to a particular stream; and
displaying video and/or audio data through the decoder independently of the other embedded decoders.

8. A method as claimed in claim 7, wherein the associating a decoder to a particular stream occurs by matching the source of the video stream to a predetermined list.

9. A method as claimed in claim 7, wherein the associating a decoder to a particular stream occurs by hard-coding the IP address of the source of the video stream.

10. A system comprising:
(a) an template capable of receiving multiple multimedia streams; and
(b) multiple decoders embedded within the template, wherein each decoder is associated with a particular multimedia stream and where each of the decoders open independently of each other within the template in response to the multimedia stream.

11. A system as claimed in claim 10, wherein the HTML template is housed inside of a host.

12. The system as claimed in claim 11, wherein the host is central to multiple clients, each client provides a source of encoded streaming multimedia data, wherein the streaming multimedia data from each client is routed to the host over a network.

13. A system as claimed in claim 10, wherein the HTML template contains means to determine the source and/or authorization for each multimedia stream.

14. A system as claimed in claim 10, wherein each of the multiple decoders corresponds to one of a multitude of windows, wherein each of the multitude of windows displays an independent viewable screen, and wherein each viewable screen contains decoded multimedia data.

15. A computer readable program, stored in a storage medium, for displaying multiple windows within a central HTML processing space, said program comprising:
(**a**) program instructions in the medium for receiving encoded multimedia streams from various independent sources at the central HTML processing space;
(**b**) program instruction in the medium for associating each multimedia stream with a decoder embedded in the HTML processing space; and
(**c**) program instructions in the medium for activating each decoder upon receipt of its respective multimedia stream.
